# EUROPEAN PATENT SPECIFICATION

(11) **EP 0 319 744 B1**
(45) Date of publication and mention of the grant of the patent: **20.01.1993**
(21) Application number: 88118996.3
(22) Date of filing: 15.11.1988
(51) Int. Cl.: G21C 3/32

(54) **Fuel-rod mini-bundle for use in a BWR fuel assembly**
Teilbrennstabbündel zur Verwendung in einem Brennstabbündel des Siedewasserreaktortyps
Assemblage partiel de barreaux de combustible pour l'application dans un assemblage de combustible du type réacteur à eau bouillante

(30) Priority: 07.12.1987 US 130034
(43) Date of publication of application: 14.06.1989
(73) Proprietor: WESTINGHOUSE ELECTRIC CORPORATION, Pittsburgh Pennsylvania 15222 (US)
(72) Inventor: Taleyarkhan, Rusi Pesi, Pittsburgh Pennsylvania 15239 (US)
(74) Representative: Gallo, Wolfgang, Dipl.-Ing. (FH)

(56) References cited:
- EP-A- 0 065 697
- US-A- 4 059 484
- US-A- 4 560 532

## Description

The present invention relates generally to nuclear reactors and, more particularly, to fuel-rod mini-bundles in or for boiling-water reactor fuel assemblies.

In a nuclear reactor, large amounts of energy are released through nuclear fissioning. This energy is dissipated in the fuel elements or fuel rods of the reactor in the form of heat which commonly is removed from the fuel rods by passing coolant over their surfaces, and is then extracted from the coolant to be utilized in performing useful work.

In a nuclear reactor generally, the fuel rods are grouped together in fuel assemblies which, in turn, are arranged in a matrix such as to form a reactor core capable of a self-sustained nuclear fission reaction. The core is submersed in a flowing liquid, such as light water, which serves both as a coolant for removing heat from the fuel rods and as a neutron moderator. In a boiling water reactor (BWR), the fuel assemblies typically are grouped in clusters of four, and each such cluster has associated therewith a control rod which is insertable therein to control the reactivity of the reactor core. Each cluster of fuel assemblies arrayed round a control rod is commonly referred to in the art as a fuel cell of the reactor core.

A typical BWR fuel assembly comprises a bundle of fuel rods arrayed N by N and supported in parallel spaced relationship with respect to each other, and includes a tubular outer flow channel of generally rectangular cross-section which surrounds the N-by-N array of fuel rods. The outer flow channel extends substantially for the full length of the fuel assembly and connects a top nozzle to a bottom nozzle both of which nozzles likewise form part of the fuel assembly, the bottom nozzle fitting into the reactor-core support plate and serving as an inlet for coolant flowing into the outer flow channel, through the spaces between and along the fuel rods, and out of the fuel assembly through its top nozzle. A typical BWR fuel assembly is disclosed in U.S. patent No. 4,560,532.

In a fuel assembly of this type, the fuel rods in the central region of the fuel rod bundle may be under-moderated and over-enriched. In order to remedy this condition by increasing the flow of neutron-moderating coolant through this central region of the fuel assembly, the latter preferably is provided with an elongate water-cross comprising four radial panels which are hollow and interconnected so as to define a channel of cruciform cross-section for neutron-moderating coolant to flow therethrough. This water-cross is disposed within the outer flow channel generally coaxially therewith so as to divide its interior space into four elongate compartments and to divide the bundle of fuel rods therein into four mini-bundles each disposed in one of the four compartments. The fuel rods of each mini-bundle extend between an upper tie plate and a lower tie plate, and they are connected to the upper and lower tie plates so as to form, together therewith, a unitary fuel-rod subassembly.

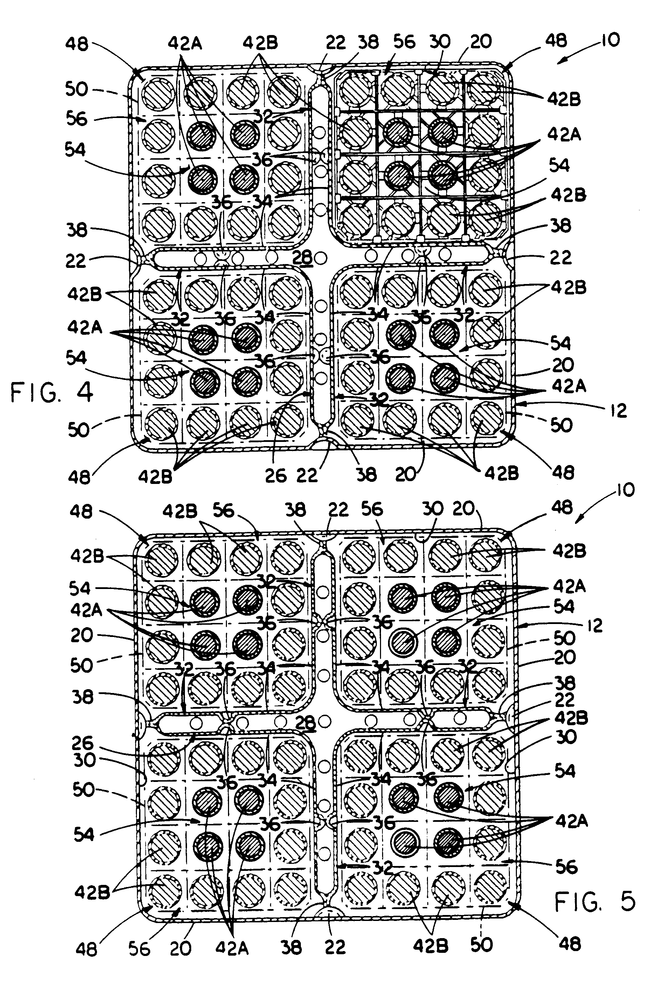

Because of the presence of the water-cross in a BWR fuel assembly of the kind disclosed in U.S. Patent No. 4,560,532, there is about twice as much area of "cool" or "unheated" wall surface to which liquid coolant can "cling" than in a BWR fuel assembly of the open lattice design described in U.S. Patent Nos. 3,689,358 and 3,802,423, for example. Since the liquid coolant thus has a greater tendency to cling to the cooler wall surfaces, the heated surfaces within the interior of mini-bundles may become relatively starved of liquid coolant. When the liquid coolant film on a heated surface dries up, a critical heat flux (CHF) problem may occur in that the ensuing coolant-flow distribution tends to degrade the CHF characteristics of a BWR fuel assembly of this type at its interior fuel-rod locations. This thermal-hydraulic effect is clearly depicted in Fig. 4.42, page 125, of a 1977 ANS Monograph entitled "The Thermal Hydraulics of a Boiling Water Nuclear Reactor" by R. T. Lahey et al., which shows the relative liquid/vapor distribution within a rod bundle assembly. From the flow quality contours depicted therein it is seen that the lower the flow quality, the higher the liquid content, and vice versa. The tendency of liquid to cling to walls and of vapor to accumulate in the interior is clearly apparent therefrom, and can be readily understood that such a condition is likely to cause premature dryout (i.e. at lower bundle-power levels). In the case of a BWR fuel assembly design employing a water-cross, this reduction amounts to about 15-20% difference in performance for the corner/side versus interior fuel-rod locations, based on recently completed CHF tests. Such a variation reduces the critical power performance of the fuel bundle considerably by up to 20% in cases of interior peaking.

It is the principal object of the invention to provide ways and means of minimizing or even eliminating such performance degradation.

The invention accordingly resides in a mini-bundle of fuel rods in or for a BWR fuel assembly having an outer tubular coolant/moderator flow channel containing a hollow water-cross which divides the interior of the flow channel into elongate compartments each for receiving one said mini-bundle of fuel rods, characterized in that the fuel rods of said mini-bundle form an interior array of fuel rods of a first diametric size, and a peripheral array of fuel rods of a second diametric size, said first diametric size being smaller than said second diametric size.

Thus, the invention attains its objective by utilizing a demonstrated thermal-hydraulic effect on critical heat flux (CHF) relating to flow area and heated surface, namely, the effect that the larger the flow area per heated surface, the better the heat transfer characteristics and, hence, the CHF performance. The invention applies this effect to a BWR fuel assembly with a water-cross by employing fuel rods of smaller diameter in the interior of each mini-bundle than along its periphery. It has been found that a reduction in diameter of the interior rods by about 10-12% will lead to an overall improvement of about 15% in bundle critical power.

Preferably, the interior array of fuel rods forms an inner, centrally located, generally square pattern, and the peripheral array of fuel rods forms an outer, peripherally located, generally square pattern surrounding the interior pattern. Furthermore, the only fuel rods present in the interior array are the fuel rods of the smaller diametric size, and the only fuel rods present in the peripheral array are the fuel rods of the larger diametric size. The fuel rods in the interior and peripheral arrays preferably are aligned with one another in columns and rows.

A preferred embodiment of the invention will now be described, by way of example only, with reference to the accompanying drawings, in which:
Figure 1 is an elevational view of a BWR fuel assembly, with parts shown broken away and sectioned for clarity;
Fig. 2 is an enlarged top plan view of the fuel assembly as seen along line 2--2 of Fig. 1;
Fig. 3 is an enlarged bottom plan view of the fuel assembly as seen along line 3--3 of Fig. 1;
Fig. 4 is a cross-sectional view of the fuel assembly, as taken along line 4--4 of Fig. 1, showing the invention embodied therein; and
Fig. 5 is a cross-sectional view similar to Fig. 4 but taken along line 5--5 of Fig. 1.

In the following description, like reference characters designate like or equivalent parts throughout the various views of the drawings, and terms such as "forward", "rearward", "left", "right", "upward", "downward", and the like are used as words of convenience not to be construed as limiting terms.

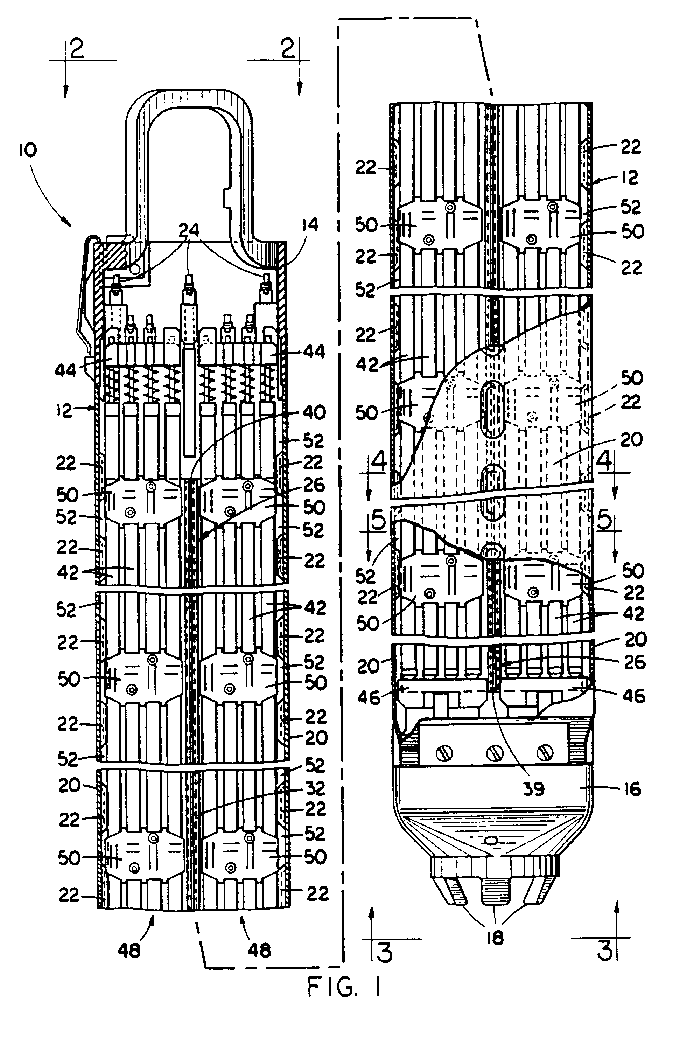

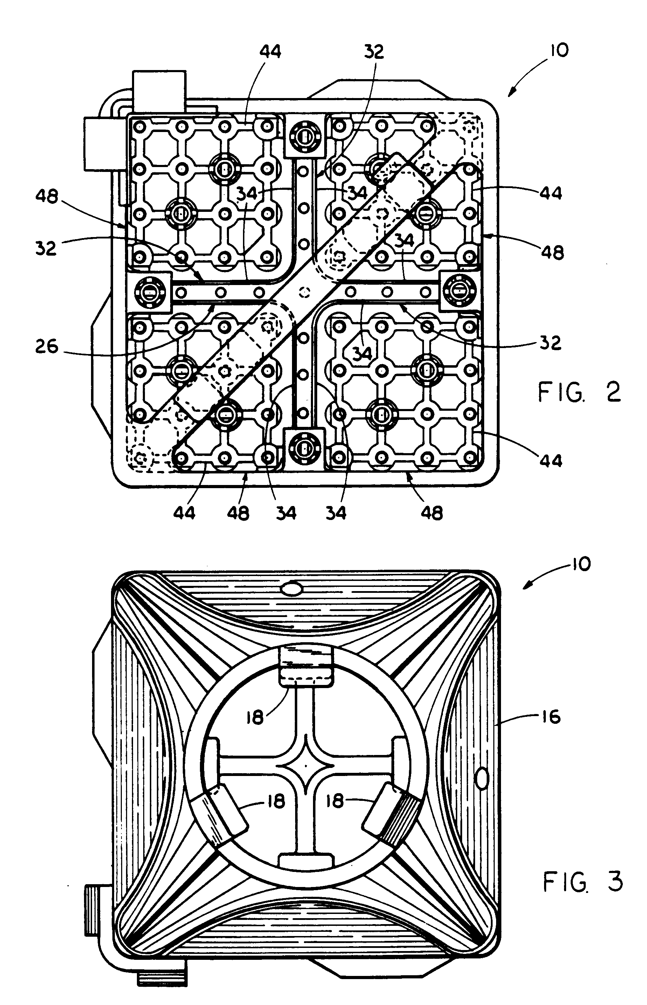

Referring now to the drawings, and particularly to Figs. 1 to 3 thereof, the nuclear fuel assembly illustrated therein and generally designated 10 is for use in a boiling-water type nuclear power reactor (BWR). The fuel assembly 10 includes an elongate, tubular outer flow channel 12 which extends substantially for the full length of the fuel assembly 10 and connects an upper support fixture or top nozzle 14 to a lower base or bottom nozzle 16. The bottom nozzle 16 which serves as an inlet for coolant flow into the outer flow channel 12 has legs 18 for guiding it into a reactor core support plate (not shown) or into fuel storage racks located, for example, in a spent-fuel pool.

The outer flow channel 12, preferably formed of a zirconium alloy known as Zircaloy and being generally rectangular in cross-section, consists of four interconnected walls 20 extending substantially at right angles with respect to each other and each having on its inner surface a plurality of structural ribs 22 spaced apart in a vertical row located about midway between the lateral ends of the respective wall 20. Above the rows of structural ribs 22, the walls 20 have affixed thereto upwardly extending attachment studs 24 which are used to connect the top nozzle 14 to the outer flow channel 12.

As seen from Figs. 1, 2, 4 and 5, the fuel assembly 10 includes further a hollow water-cross generally designated 26. This water-cross 26 extends axially through the outer flow channel 12, dividing the latter into four separate elongate compartments 30, and defines an inner coolant/moderator flow channel 28 of generally cruciform cross-section. The water cross 26 is formed of four elongate, generally L-shaped metal angles or sheet members 34 arranged and joined, e.g. welded, together along their outer longitudinal edges so as to form four hollow, radial panels 32, the walls of each of which are maintained in the desired parallel spaced relationship with respect to each other by inwardly protruding dimples 36 which are formed on the panel-defining leg portions of the sheet members 34 and joined, e.g. welded, together at their apices (see Figs. 4 and 5).

The hollow water-cross 26 is attached to the walls 20 of the outer flow channel 12, preferably by having the outer ends of its panels 32 joined, e.g. welded, to the structural ribs 22 of the outer channel walls 20, and it has an inlet 39 at its lower end and an outlet 40 at its upper end, which inlet 39 and outlet 40 communicate with the flow channel 28 within the water-cross.

Disposed within the outer flow channel 12 is a bundle of fuel rods 42 arrayed N x N (in the illustrated embodiment, N = 8 fuel rods) and divided by the water-cross 26 into four equal mini-bundles of n x n fuel rods each (in the illustrated embodiment, n = 4). The fuel rods 42 of each mini-bundle are connected at their opposite ends to upper and lower tie plates 44, 46, and they are supported in parallel spaced relationship with respect to each other by means of grids 50 spaced axially along the respective fuel rod mini-bundle. Each mini-bundle of fuel rods 42, together with the tie plates 44,46 and spacer grids 50 associated therewith, form a fuel-rod subassembly 46 located in the respective compartment 30 within the outer flow channel 12. The lower and upper tie plates 44,46 of each fuel-rod subassembly 46 have flow openings defined therethrough to permit coolant/moderator fluid to enter and exit the subassembly. The various compartments 30 in the fuel assembly are in fluid flow communication with each other through the gaps 52 between the structural ribs 22 so that there is pressure equalization between the compartments and, consequently, minimal risk of thermal hydrodynamic instability among the various fuel-rod subassemblies.

To the extent specifically described thus far, the BWR fuel assembly 10 is conventional. The description thereof as provided herein is believed to be sufficient to enable a person of ordinary skill in the art to understand the invention, but if more information on the basic con struction of such BWR fuel assembly is desired, reference may be had to the above-mentioned U.S. Patent No. 4,560,532.

The features embodying the invention will now be described with particular reference to Figs. 4 and 5. As seen therefrom, each of the four fuel-rod mini-bundles is composed of fuel rods 42 of two different diametric sizes, and these fuel rods are arranged in an interior array 54 of fuel rods 42A having a first diametric size, and a peripheral array 56 of fuel rods 42B having a second diametric size, the fuel rods 42A of the interior array 54 being smaller in diameter than the fuel rods 42B of the peripheral array 56. Preferably, the fuel 42A of the interior array 54 are about 10-12% smaller in diameter as compared to the fuel rods 42B of the peripheral array 56.

Likewise as shown in Figs. 4 and 5, the fuel rods 42 form a substantially square overall array in which four fuel rods 42A pertaining to the interior array 54 are arranged in an inner or central, generally squared pattern, and twelve fuel rods 42B pertaining to the peripheral array 56 are arranged in an outer or peripheral, generally squared pattern surrounding the interior array 54. It will be noted that the only fuel rods present in the inner squared pattern are fuel rods 42A of the first or reduced diametric size, and the only fuel rods present in the outer squared pattern are the fuel rods 42B of the second or larger diametric size.

Summing up, the invention utilizes a demonstrated thermal-hydraulic effect to arrive at a new design of a BWR fuel assembly containing a water-cross, which design is unique in that it employs fuel rods of different diametric sizes for interior and peripheral rod location in order to alleviate the limitations on CHF performance inherent in conventional BWR fuel assemblies with water-crosses due to the additional "cold wall" surfaces presented by the latter. Preferably, the rod diameter of the interior fuel rods 42A in each mini-bundle embodying the invention is about 10-12% less than the diameter of the peripheral fuel rods 42B. Experimental evidence for the CHF performance of BWR fuel assemblies with water-crosses has demonstrated that the corner and side rods display greatly superior performance (more than 10-15% in terms of critical power) relative to the interior rods. The invention increases the flow area per rod for the interior rods, thereby improving heat transfer and, simultaneously therewith, reducing the power rating through the smaller-diameter rods. Standard nuclear design approaches could be employed to increase the enrichment of the side/corner fuel rods such that the total fuel-assembly power generated will remain the same. This unique combination of factors leads to a fuel assembly with superior (about 10%) CHF performance by improving the CHF performance of the interior rods to levels of the side/corner rods.

## Claims

1. A mini-bundle of fuel rods (42) in or for a BWR fuel assembly (10) having an outer tubular coolant/moderator flow channel (12) containing a hollow water-cross (26) which divides the interior of the flow channel (12) into elongate compartments (30) each for receiving one said mini-bundle of fuel rods (42), characterized in that the fuel rods (42) of said mini-bundle form an interior array (54) of fuel rods (42A) of a first diametric size, and a peripheral array (56) of fuel rods (42B) of a second diametric size, said first diametric size being smaller than said second diametric size.

2. A mini-bundle of fuel rods according to claim 1, characterized in that said interior array (54) of fuel rods (42A) forms an inner, centrally located, generally square pattern.

3. A mini-bundle of fuel rods according to claim 1 or 2, characterized in that the only fuel rods present in said interior array (54) are the fuel rods (42A) having said first diametric size.

4. A mini-bundle of fuel rods according to claim 1, 2 or 3, characterized in that said peripheral array (56) of fuel rods (42B) forms an outer, peripherally located, generally square pattern surrounding said interior array (54) of fuel rods (42A).

5. A mini-bundle of fuel rods according to claim 1, 2, 3 or 4, characterized in that the only fuel rods present in said peripheral array (56) are the fuel rods (42B) having said second diametric size.

6. A mini-bundle of fuel rods according to any one of the preceding claims, characterized in that the fuel rods (42) in said interior and peripheral arrays (54, 56)) are aligned with one another in columns and rows.

7. A mini-bundle of fuel rods according to any one of the preceding claims, characterized in that the fuel rods (42A) of said interior array (54) are from ten to twelve percent less in diametric size compared with the fuel rods (42B) of said peripheral array (56).

## Patentansprüche

1. Brennstab-Minibündel (42) in einem oder für ein Siedewasserreaktor-Brennelement (10), das einen äußeren rohrförmigen Kühlmittel/Moderator-Strömungskanal (12) mit einem hohlen Wasserkreuz (26) aufweist, welches das Innere des Strömungskanals (12) in längliche Teilkammern (30) unterteilt, die jeweils zur Aufnahme eines Brennstab-Minibündels (42) dienen, dadurch gekennzeichnet, daß die Brennstäbe (42) des Minibündels eine innere Gruppe (54) von Brennstäben (42A) eines ersten Durchmessers und eine periphere Gruppe (56) von Brennstäben (42B) eines zweiten Durchmessers bilden, wobei der erste Durchmesser kleiner als der zweite Durchmesser ist.

2. Brennstab-Minibündel nach Anspruch 1, dadurch gekennzeichnet, daß die innere Gruppe (54) von Brennstäben (42A) ein inneres, zentrisch angeordnetes, etwa quadratisches Muster bildet.

3. Brennstab-Minibündel nach Anspruch 1 oder 2, dadurch gekennzeichnet, daß die innere Gruppe (54) nur Brennstäbe (42A) des genannten ersten Durchmessers enthält.

4. Brennstab-Minibündel nach Anspruch 1, 2 oder 3, dadurch gekennzeichnet, daß die periphere Gruppe (56) von Brennstäben (42B) ein äußeres, peripher verlaufendes, etwa quadratisches Muster bildet, welches die innere Gruppe (54) von Brennstäben (42A) umschließt.

5. Brennstab-Minibündel nach Anspruch 1, 2, 3 oder 4, dadurch gekennzeichnet, daß die periphere Gruppe (56) nur Brennstäbe (42B) des genannten zweiten Durchmessers enthält.

6. Brennstab-Minibündel nach einem der vorhergehenden Ansprüche, dadurch gekennzeichnet, daß die Brennstäbe (42) der inneren und äußeren Gruppe (54, 56) mit Bezug zueinander in Spalten und Reihen ausgerichtet sind.

7. Brennstab-Minibündel nach einem der vorhergehenden Ansprüche, dadurch gekennzeichnet, daß die Brennstäbe (42A) der inneren Gruppe (54) einen im Vergleich zu den Brennstäben (42B) der peripheren Gruppe (56) von 10 bis 12% kleineren Durchmesser haben.

## Revendications

1. Mini-faisceau de barreaux de combustible (42) dans ou pour un assemblage de combustible BWR (10) comportant un canal d'écoulement réfrigérant/modérateur (12) tubulaire externe contenant un passage d'eau creux (26) qui divise l'intérieur du canal d'écoulement (12) en des compartiments (30) de forme allongée destinés à recevoir chacun l'un desdits mini-faisceaux de barreaux de combustible (42); caractérisé en ce que les barreaux de combustible (42) dudit mini-faisceau forment un réseau intérieur (54) de barreaux de combustible (42A) d'un premier diamètre, et un réseau périphérique (56) de barreaux de combustible (42B) d'un second diamètre, ledit premier diamètre étant inférieur audit second diamètre.

2. Mini-faisceau de barreaux de combustible selon la revendication 1, caractérisé en ce que ledit réseau intérieur (54) de barreaux de combustible (42A) forme une configuration interne, située au centre, généralement carrée.

3. Mini-faisceau de barreaux de combustible selon la revendication 1 ou 2, caractérisé en ce que les seuls barreaux de combustible présents dans ledit réseau intérieur (54) sont les barreaux de combustible (42A) ayant ledit premier diamètre.

4. Mini-faisceau de barreaux de combustible selon la revendication 1, 2 ou 3, caractérisé en ce que ledit réseau périphérique (56) de barreaux de combustible (42B) forme une configuration externe, située à la périphérie, généralement carrée, entourant ledit réseau intérieur (54) de barreaux de combustible (42A).

5. Mini-faisceau de barreaux de combustible selon la revendication 1, 2, 3 ou 4, caractérisé en ce que les seuls barreaux de combustible présents dans ledit réseau périphérique (56) sont les barreaux de combustible (42B) ayant ledit second diamètre.

6. Mini-faisceau de barreaux de combustible selon l'une quelconque des revendications précédentes, caractérisé en ce que les barreaux de combustible (42) dans lesdits réseaux intérieur et périphérique (54,56) sont alignés les uns avec les autres selon des colonnes et des rangées.

7. Mini-faisceau de barreaux de combustible selon l'une quelconque des revendications précédentes, caractérisé en ce que les barreaux de combustible (42A) dudit réseau intérieur (54) ont un diamètre de dix à douze pourcents inférieur à celui des barreaux de combustible (42B) dudit réseau périphérique (56).
